# EUROPÄISCHE PATENTANMELDUNG

(11) **EP 2 436 654 A2**
(43) Veröffentlichungstag der Anmeldung: **04.04.2012**
(21) Anmeldenummer: 11183330.7
(22) Anmeldetag: 29.09.2011
(51) Int. Cl.: C02F 1/68

(54) **Vorrichtung für eine Trinkwasseraufbereitungsanlage umfassend einen Filterkopf**

(30) Priorität: 01.10.2010 DE 202010013845 U
(71) Anmelder: Schmidt, Oliver, 27777 Ganderkesee (DE)
(72) Erfinder: Schmidt, Oliver, 27777 Ganderkesee (DE)
(74) Vertreter: Jabbusch, Matthias

(57) **Zusammenfassung**

Eine Vorrichtung für eine Trinkwasseraufbereitungsanlage hat einen Filterkopf (1), der wenigstens eine Trinkwasserzulaufleitung (2), wenigstens eine Trinkwasserauslaufleitung (3) sowie wenigstens eine zwischen der Trinkwasserzulaufleitung (2) und der Trinkwasserauslaufleitung (3) angeordnete Filterpatronenaufnahme (4) aufweist. Der Filterkopf (1) weist wenigstens eine an der Trinkwasserauslaufleitung (3) ausgebildete Desinfektionsmittelzuführöffnung (5) auf, die als Beschickungsöffnung eines in der Trinkwasserauslaufleitung (3) angeordneten Spülkäfigs (17) ausgebildet ist.
Der Spülkäfig umfasst eine Desinfektionsmitteltablette (18). In einem anderen Ausführungsbeispiel ist die Desinfektionsmittelzuführöffnung (5) als Auslaufleitung einer in die Trinkwasserauslaufleitung (3) führenden Zulaufleitung (6) ausgebildet, wobei die Trinkwasserauslaufleitung (3) und die Zulaufleitung (6) über eine Venturidüse (8) miteinander verbunden sind.

## Beschreibung

Die Erfindung betrifft eine Vorrichtung für eine Trinkwasseraufbereitungsanlage mit einem Filterkopf, der wenigstens eine Trinkwasserzulaufleitung, wenigstens eine Trinkwasserauslaufleitung sowie wenigstens eine zwischen der Trinkwasserzulaufleitung und der Trinkwasserauslaufleitung angeordnete Filterpatronenaufnahme aufweist.

Bekannte Vorrichtungen dienen dem Anschluss von Filterpatronen sowie deren regelmäßigem Austausch. Um zu verhindern, dass Keime und Bakterien von den Trinkwasserauslässen die Leitungen der Trinkwasseraufbereitungsanlage bis in die Filterpatronen hinauf wandern, ist es bekannt die zwischen dem Filterkopf und dem Trinkwasserauslass gelegenen Leitungsteile in regelmäßigen Abständen zu desinfizieren. Zur Desinfektion sind insbesondere mobil und in regelmäßigen Zeitabständen einsetzbare Vorrichtungen bekannt, mit denen die Trinkwasserleitung über flexible Verbindungsleitungen mit Desinfektionsflüssigkeit beschickt bzw. gespült werden. Da der Einsatz dieser bekannten Vorrichtungen relativ zeitaufwendig ist, wird in der deutschen Gebrauchsmusterschrift 20 2004 013 168.4 vorgeschlagen, eine Flüssigkeitsaufbereitungsleitung mittels einer Wechselpatrone zu desinfizieren, die einen Durchlaufbehälter mit einer Desinfektionsmittelaufnahme aufweist. Diese Wechselpatrone kann gegen bekannte Filterpatronen ausgetauscht bzw. ausgewechselt werden. Das in der Desinfektionsmittelaufnahme enthaltene Desinfektionsmittel gelangt somit in einem Beschickungsvorgang über eine vorbestimmte, den Durchlaufbehälter durchströmende Menge ungefilterten Wassers in die zu desinfizierenden Trinkwasserleitungen. Insbesondere bei Filterpatronen, die einen sogenannten Mikrofilter aufweisen, besteht das deutliche Risiko, den Beschickungsvorgang unbeabsichtigt ohne Desinfektionsmittel, mit einer zu geringen Menge Desinfektionsmittel oder mit einer zu großen Menge ungefilterten Wassers durchzuführen, so dass im ungefilterten Wasser mitgeführte Keime und Bakterien in reproduktionsfähigem Zustand in die zu desinfizierenden Leitungsteile gelangen können. Nach erfolgtem Beschickungsvorgang ist die die Desinfektionsmittelaufnahme aufweisende Wechselpatrone wieder gegen eine Filterpatrone auszutauschen, wobei für die Zeit des Patronenwechsels die Anschlussöffnung der Filterpatronenaufnahme ungeschützt der Atmosphäre ausgesetzt ist. Dabei kann es auch bei zuvor wirksam durchgeführter Desinfektion zu einer Neukontamination mit Keimen und Bakterien kommen, die dann durch nachfolgende Spül- und/oder Zapfvorgänge in die unmittelbar zuvor desinfizierten Leitungsteile hineingelangen können.

Der Erfindung liegt daher die Aufgabe zugrunde, eine Vorrichtung der eingangs genannten Gattung aufzuzeigen, mit der die Desinfektion von Trinkwasseraufbereitungsanlagen besonders einfach durchführbar ist, ohne dabei das Risiko einer Neukontamination der Trinkwasserleitungen mit Bakterien und Keimen zu vergrößern.

Diese Aufgabe ist erfindungsgemäß durch eine Vorrichtung mit den Merkmalen des Patentanspruches 1 gelöst. Vorteilhafte Weiterbildungen der Erfindung sind in den Unteransprüchen beschrieben.

Die erfindungsgemäße Vorrichtung zeichnet sich dadurch aus, dass der Filterkopf wenigstens eine an der Trinkwasserauslaufleitung ausgebildete Desinfektionsmittelzuführöffnung aufweist. Diese dient ausschließlich der Zuführung eines Desinfektionsmittels und keinesfalls der Hindurchleitung einer Desinfektionsmittellösung, die ein der Filterpatronenaufnahme über die Trinkwasserzulaufleitung zugeführtes Trinkwasser enthält. Eine derart angeordnete Desinfektionsmittelzuführöffnung hat den Vorteil, dass eine Desinfektion der Trinkwasseraufbereitungsanlage bei in der Filterpatronenaufnahme eingesetzter Filterpatrone durchgeführt werden kann, so dass die Filterpatrone die Trinkwasserauslaufleitung dauerhaft gegen Keime und Bakterien aus der Trinkwasserzulaufleitung schützt. Die Desinfektionsmittelzuführöffnung dient der direkten Zufuhr eines fluiden, festen oder gasförmigen Desinfektionsmittels in die Trinkwasserauslaufleitung. Nach Beendigung einer über die Desinfektionsmittelzuführöffnung erfolgenden Desinfektionsmittelzufuhr kann die Desinfektionsmittelzuführöffnung verschlossen werden. Ein erneutes Öffnen der Desinfektionsmittelzuführöffnung ist vorteilhaft auch nach Beendigung der Desinfektionsmittelzufuhr nicht erforderlich, so dass das Risiko einer Neukontamination mit Bakterien und Keimen maßgeblich verringert ist.

Nach einer ersten Weiterbildung der Erfindung ist die Desinfektionsmittelzuführöffnung als Beschickungsöffnung eines in der Trinkwasserauslaufleitung angeordneten Spülkäfigs ausgebildet. Dieser dient vorzugsweis der Aufnahme fester Desinfektionsmittel, die sich in dem durch den Spülkäfig hindurch fließenden Trinkwasser auflösen. Das feste Desinfektionsmittel ist insbesondere in Form von Tabletten ausgebildet. Die Beschickungsöffnung dient dabei ausschließlich dazu, dem Spülkäfig das Desinfektionsmittel zuführen zu können. Es liegt jedoch auch im Rahmen der Erfindung, die Desinfektionsmittelzuführöffnung über eine die Filterpatronenaufnahme ausbildende Anschlussöffnung herzustellen. Dazu fungiert dann die Anschlussöffnung als Beschickungsöffnung eines in der Trinkwasserauslaufleitung angeordneten Spülkäfigs und die Filterpatrone fungiert als mit der Beschickungsöffnung zusammenwirkendes Verschlussteil.

Nach einer nächsten Weiterbildung der Erfindung weist die Beschickungsöffnung mit einem Deckelverschluss zusammenwirkende Kupplungsstrukturen auf. Diese Kupplungsstrukturen dienen insbesondere der Ausbildung einer Schraubkupplung. Es ist jedoch ebenso denkbar, mit den Kupplungsstrukturen andere Verbindungstechniken zu realisieren, die ein einfaches und schnelles Öffnen und Schließen der Beschickungsöffnung ermöglichen.

Eine besonders robuste und gleichwohl einfach zu installierende Vorrichtung ist dadurch geschaffen, dass der Filterkopf und der Spülkäfig über wenigstens ein Gehäuse einstückig miteinander verbunden sind. Auf diese Weise bildet die erfindungsgemäße Vorrichtung ein einziges Aggregat aus, in welchem der Filterkopf und der Spülkäfig unzertrennlich miteinander verbunden sind. Es liegt jedoch durchaus im Rahmen der Erfindung, den Filterkopf aus zwei Gehäuseteilen zusammenzusetzen, wobei dann mit einem der Gehäuseteile der Spülkäfig ausgebildet ist. Selbstverständlich kann der Spülkäfig aus einem Spülraum und einem darin aufnehmbaren Käfigeinsatz zusammengesetzt sein. In diesem Fall wäre dann der Spülraum im Gehäuseteil des Filterkopfes ausgeformt.

Nach einer nächsten Weiterbildung der Erfindung ist die Desinfektionsmittelzuführöffnung als Auslauföffnung einer in die Trinkwasserauslaufleitung führenden Zulaufleitung ausgebildet. Die Zulaufleitung ist vorzugsweise als eine in einem Gehäuse des Filterkopfes gelegene Kernbohrung ausgebildet. Zum Anschluss an eine Desinfektionsmittelquelle weist die Zulaufleitung mit der Desinfektionsmittelquelle zusammenwirkende Anschlussstrukturen auf, die als Steck-, Schraub- oder Rastverbindungen ausgebildet sein können.

Um die Zulaufleitung unmittelbar nach jeder Desinfektionsmittelzufuhr zuverlässig verschließen zu können, ist in der Zulaufleitung wenigstens ein Rückschlagventil angeordnet. Das beweglich in dem Rückschlagventil gehaltene Verschlussteil weist mit der Zulaufleitung zusammenwirkende Kupplungsstrukturen auf, die insbesondere der Ausbildung eines Ventilsitzes dienen. Es liegt jedoch im Rahmen der Erfindung, die Zulaufleitung mit anderen Verschlusstechniken auszurüsten, die ein einfaches und schnelles Öffnen und Schließen der Auslauföffnung ermöglichen.

Nach einer besonders vorteilhaften Weiterbildung der Erfindung sind die Trinkwasserauslaufleitung und die Zulaufleitung über wenigstens eine Venturidüse miteinander verbunden. Für diese Verbindung ist die Zulaufleitung mit dem bei Venturidüsen als Abnahmerohr bezeichneten Leitungsstück verbunden. Das Abnahmerohr weist vorzugsweise mehrere Mündungsöffnungen auf, die im Bereich der düsenartigen Verengung der die Venturidüse durchlaufenden Trinkwasserauslaufleitung gleichmäßig verteilt angeordnet sind. Mit der Venturidüse fungiert die Zulaufleitung als eine Saugleitung. Es ist jedoch ebenso denkbar, die Desinfektionsmittelquelle mit einem Überdruck zu beaufschlagen, so dass die Zulaufleitung dann als Druckleitung fungieren würde.

Eine besonders robuste und gleichwohl einfach zu installierende Vorrichtung ist weiterhin dadurch geschaffen, dass der Filterkopf und die Venturidüse ebenfalls über wenigstens ein Gehäuse einstückig miteinander verbunden sind. Auf diese Weise bildet die erfindungsgemäße Vorrichtung ein einziges Aggregat aus, in welchem der Filterkopf und die Venturidüse unzertrennlich miteinander verbunden sind. Es liegt jedoch durchaus im Rahmen der Erfindung, den Filterkopf aus zwei Gehäuseteilen zusammenzusetzen, wobei dann mit einem der Gehäuseteile die Venturidüse ausgebildet ist.

Eigenständiger Schutz wird für eine Filtereinrichtung beansprucht, die von der erfindungsgemäßen Vorrichtung Gebrauch macht. Im Sinne der Erfindung setzt sich die Filtereinrichtung aus einem oder mehreren Filterköpfen sowie einer beliebigen Anzahl von Filterpatronen und/oder Desinfektionsmittelpatronen zusammen.

Ein Ausführungsbeispiel, aus dem sich weitere erfinderische Merkmale ergeben, ist in der Zeichnung dargestellt. Es zeigen:
- Fig. 1:: eine perspektivische Ansicht einer teilgeschnittenen, erfindungsgemäßen Vorrichtung in einem ersten Ausführungsbeispiel;
- Fig. 2:: eine perspektivische Ansicht einer mittig geschnittenen Vorrichtung in einem zweiten Ausführungsbeispiel; und
- Fig. 3:: eine perspektivische Ansicht einer teilgeschnittenen, erfindungsgemäßen Vorrichtung in einem dritten Ausführungsbeispiel.

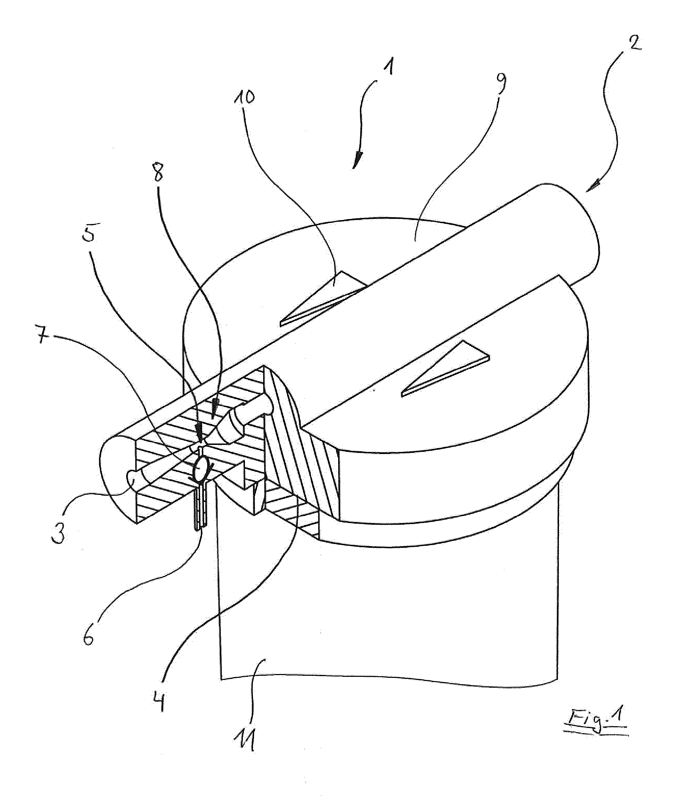

Die Fig. 1 zeigt die erfindungsgemäße Vorrichtung mit einem Filterkopf 1, der eine Trinkwasserzulaufleitung 2, eine Trinkwasserauslaufleitung 3 sowie wenigstens eine zwischen der Trinkwasserzulaufleitung 2 und der Trinkwasserauslaufleitung 3 angeordnete Filterpatronenaufnahme 4 aufweist. Der Filterkopf 1 weist eine an der Trinkwasserauslaufleitung 3 angeordnete Desinfektionsmittelzuführöffnung 5 auf, die als Auslaufleitung einer in die Trinkwasserauslaufleitung 3 führenden Zulaufleitung 6 ausgebildet ist. In der Zulaufleitung 6 ist ein Rückschlagventil 7 angeordnet. Die Trinkwasserauslaufleitung 3 und die Zulaufleitung 6 sind über eine Venturidüse 8 miteinander verbunden. Der Filterkopf 1 weist ein die Venturidüse 8 in sich aufnehmendes Gehäuse 9 auf, an dessen Oberseite zwei die Durchflussrichtung angebende Pfeile 10 angeformt sind. Das in dieser Figur dargestellte Ausführungsbeispiel zeigt die erfindungsgemäße Vorrichtung mit einer in der Filterpatronenaufnahme 4 aufgenommenen Filterpatrone 11.

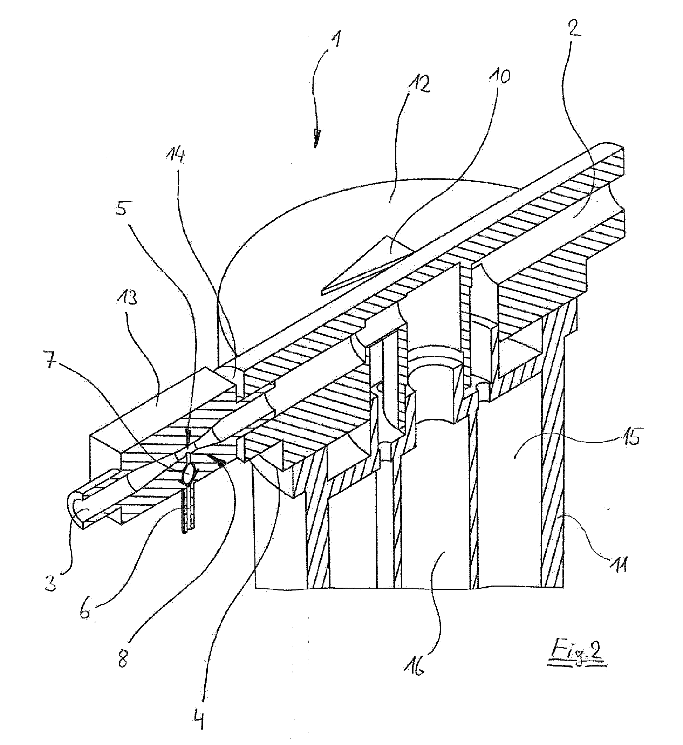

Die Fig. 2 zeigt eine perspektivische Ansicht einer mittig geschnittenen Vorrichtung in einem zweiten Ausführungsbeispiel. In diesem Ausführungsbeispiel ist der Filterkopf aus zwei Gehäuseteilen 12, 13 zusammengesetzt, wobei mit dem Gehäuseteil 13 die Venturidüse 8 ausgebildet ist. Die Gehäuseteile 12 und 13 sind über eine flüssigkeitsdichte Steckkupplung 14 miteinander verbunden. Durch den Mittenschnitt ist erkennbar, dass die Trinkwasserzulaufleitung 2 und die Trinkwasserauslaufleitung 3 über eine in der Filterpatrone 11 ausgebildete äußere Filterkammer 15 sowie eine innere Filterkammer 16 miteinander verbunden sind. Gleiche Bauteile sind mit gleichen Bezugszahlen versehen.

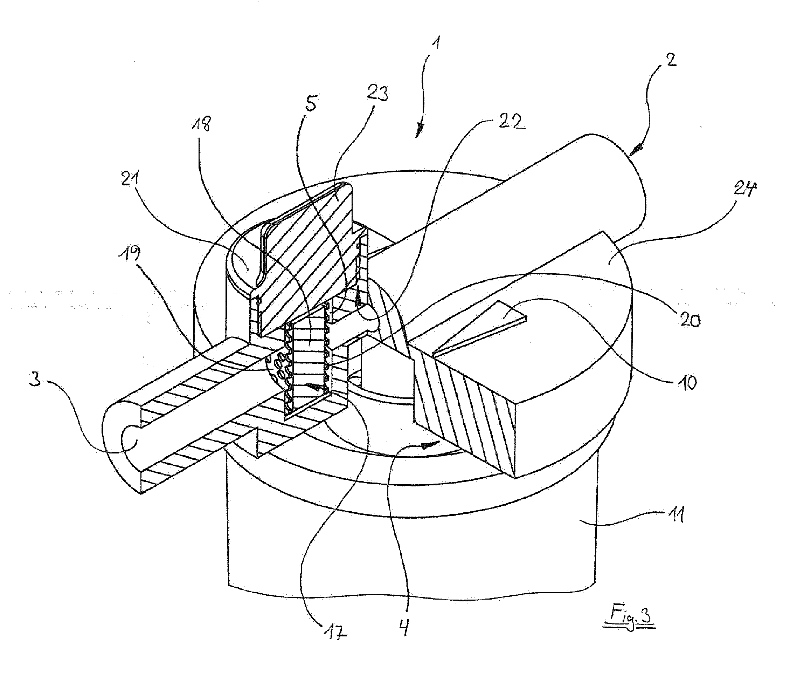

Die Fig. 3 zeigt eine perspektivische Ansicht einer teilgeschnittenen Vorrichtung in einem dritten Ausführungsbeispiel. In diesem Ausführungsbeispiel ist die Desinfektionsmittelzuführöffnung 5 als Beschickungsöffnung eines in der Trinkwasserauslaufleitung 3 angeordneten Spülkäfigs 17 ausgebildet. Der Spülkäfig 17 besteht aus einem Spülraum zur Aufnahme einer Desinfektionsmitteltablette 18 sowie zwei den Spülraum zur Trinkwasserauslaufleitung 3 begrenzenden Siebplatten 19, 20. Die als Desinfektionsmittelzuführöffnung 5 ausgebildete Beschickungsöffnung weist mit einem Deckelverschluss 21 zusammenwirkende Kupplungsstrukturen 22 auf. Im vorliegenden Ausführungsbeispiel bilden diese Kupplungsstrukturen 22 eine Schraubkupplung aus. Zur werkzeuglosen Betätigung der Schraubkupplung weist der Deckelverschluss 21 eine Handhabe 23 auf. Der Filterkopf 1 weist ein den Spülkäfig 17 in sich aufnehmendes Gehäuse 24 auf. Gleiche Bauteile sind hier ebenfalls mit gleichen Bezugszahlen versehen.

## Patentansprüche

1. Vorrichtung für eine Trinkwasseraufbereitungsanlage mit einem Filterkopf, der wenigstens eine Trinkwasserzulaufleitung, wenigstens eine Trinkwasserauslaufleitung sowie wenigstens eine zwischen der Trinkwasserzulaufleitung und der Trinkwasserauslaufleitung angeordnete Filterpatronenaufnahme aufweist,
**dadurch gekennzeichnet,**
**dass** der Filterkopf (1) wenigstens eine an der Trinkwasserauslaufleitung (3) ausgebildete Desinfektionsmittelzuführöffnung (5) aufweist.

2. Vorrichtung nach Anspruch 1, **dadurch gekennzeichnet, dass** die Desinfektionsmittelzuführöffnung (5) als Beschickungsöffnung eines in der Trinkwasserauslaufleitung (3) angeordneten Spülkäfigs (17) ausgebildet ist.

3. Vorrichtung nach Anspruch 2, **dadurch gekennzeichnet, dass** die Beschickungsöffnung mit einem Deckelverschluss (21) zusammenwirkende Kupplungsstrukturen (22) aufweist.

4. Vorrichtung nach Anspruch 2 oder 3, **dadurch gekennzeichnet, dass** der Filterkopf (1) und der Spülkäfig über wenigstens ein Gehäuse (24) einstückig miteinander verbunden sind.

5. Vorrichtung nach einem der Ansprüche 1 bis 4, **dadurch gekennzeichnet, dass** die Desinfektionsmittelzuführöffnung (5) als Auslauföffnung einer in die Trinkwasserauslaufleitung (3) führenden Zulaufleitung (6) ausgebildet ist.

6. Vorrichtung nach Anspruch 5, **dadurch gekennzeichnet, dass** in der Zulaufleitung (6) wenigstens ein Rückschlagventil (7) angeordnet ist.

7. Vorrichtung nach Anspruch 5 oder 6, **dadurch gekennzeichnet, dass** die Trinkwasserauslaufleitung (3) und die Zulaufleitung (6) über wenigstens eine Venturidüse (8) miteinander verbunden sind.

8. Vorrichtung nach Anspruch 7, **dadurch gekennzeichnet, dass** der Filterkopf (1) und die Venturidüse (8) über wenigstens ein Gehäuse (9) einstückig miteinander verbunden sind.

9. Filtereinrichtung für eine Trinkwasserversorgung mit wenigstens einer Vorrichtung nach einem der Ansprüche 1 bis 8.
